(19) Europäisches Patentamt
European Patent Office
Office européen des brevets

(11) **EP 2 699 434 B1**

(12) **FASCICULE DE BREVET EUROPEEN**

(45) Date de publication et mention de la délivrance du brevet:
**22.07.2015 Bulletin 2015/30**

(21) Numéro de dépôt: **12718910.8**

(22) Date de dépôt: **17.04.2012**

(51) Int Cl.:
**B60H 1/32** *(2006.01)* **B60H 1/00** *(2006.01)*

(86) Numéro de dépôt international:
**PCT/EP2012/001661**

(87) Numéro de publication internationale:
**WO 2012/143119 (26.10.2012 Gazette 2012/43)**

(54) **PROCEDE DE CONTROLE D'UN SYSTEME DE CONDITIONNEMENT THERMIQUE D'UN HABITACLE D'UN VEHICULE.**

VERFAHREN ZUR REGELUNG EINER KLIMAANLAGE IN EINER FAHRGASTZELLE EINES FAHRZEUGES

METHOD FOR CONTROLLING AN AIR-CONDITIONING SYSTEM OF THE PASSENGER COMPARTMENT OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2011 FR 1101237**

(43) Date de publication de la demande:
**26.02.2014 Bulletin 2014/09**

(73) Titulaire: **Valeo Systemes Thermiques**
**78321 Le Mesnil Saint Denis (FR)**

(72) Inventeurs:
• **LIU, Jin Ming**
**F-78700 Conflans Saint Honorine (FR)**
• **YAHIA, Mohamed**
**F-75005 Paris (FR)**
• **NICOLAS, Bertrand**
**F-78990 Elancourt (FR)**

(74) Mandataire: **Pellegrini, Marie Claude**
**Valeo Systemes Thermiques SAS**
**8, Rue Louis Lormand**
**La Verriere**
**78320 Le Mesnil Saint-Denis (FR)**

(56) Documents cités:
**EP-A1- 2 090 448** **WO-A1-2009/085937**
**DE-A1-102008 028 066** **US-A1- 2010 281 901**

**Description**

L'invention est du domaine des systèmes de conditionnement thermique d'un véhicule, notamment un véhicule automobile, notamment un véhicule automobile à propulsion électrique ou hybride.

Elle a plus particulièrement pour objet un procédé de contrôle d'une boucle de climatisation et une boucle de climatisation intégrée dans un tel système de conditionnement thermique.

Un véhicule automobile, en particulier un véhicule automobile électrique ou hybride dont la propulsion est assurée au moins partiellement par un moteur électrique, est couramment équipé d'une installation de chauffage, ventilation et/ou de climatisation pour modifier les paramètres aérothermiques d'un flux d'air intérieur, destiné à être distribué dans un habitacle du véhicule.

Un procédé de contrôle d'un système de conditionnement thermique d'un habitacle de véhicule automobile est connu du document WO 2009/085937 A1, qui constitue l'art antérieur le plus proche.

Dans le cadre plus spécifique des véhicules électriques ou hybrides, le refroidissement et/ou le chauffage du flux d'air intérieur est assuré par une boucle de climatisation dans laquelle circule un fluide réfrigérant.

La boucle de climatisation comprend, notamment, un compresseur, un échangeur de chaleur extérieur, un organe de détente et au moins un échangeur de chaleur intérieur parcourus par le fluide réfrigérant. L'échangeur de chaleur intérieur est installé dans un boîtier de l'installation de chauffage, ventilation et/ou climatisation, généralement disposé dans l'habitacle du véhicule. Le boîtier est destiné à canaliser le flux d'air intérieur afin de modifier les paramètres aérothermiques de celui-ci en fonction d'une demande d'un utilisateur du véhicule. L'échangeur de chaleur extérieur est, préférentiellement, agencé en face avant du véhicule pour être traversé par un flux d'air extérieur au véhicule.

La boucle de climatisation peut être utilisée selon divers modes de fonctionnement, en particulier un mode dit "refroidissement" ou un mode dit "chauffage".

Dans le mode dit "refroidissement", le fluide réfrigérant est envoyé vers l'échangeur de chaleur extérieur. Dans cette configuration, l'échangeur de chaleur extérieur se comporte comme un condenseur, dans lequel le fluide réfrigérant est refroidi par le flux d'air extérieur. Puis, le fluide réfrigérant circule vers l'organe de détente, dans lequel il subit un abaissement de pression, avant de traverser l'échangeur de chaleur intérieur. Dans cette configuration, l'échangeur de chaleur intérieur se comporte comme un évaporateur, dans lequel le fluide réfrigérant est chauffé par le flux d'air intérieur canalisé dans l'installation de chauffage, ventilation et/ou de climatisation. Corrélativement, le flux d'air intérieur est donc refroidi dans le but d'abaisser la température de l'habitacle du véhicule. La boucle de climatisation est un circuit fermé. Par conséquent, le fluide réfrigérant retourne, par suite, vers le compresseur.

Dans le mode dit "chauffage", le fluide réfrigérant est envoyé vers l'échangeur de chaleur intérieur. Dans cette configuration, l'échangeur de chaleur intérieur se comporte comme un condenseur, dans lequel le fluide réfrigérant est refroidi par le flux d'air intérieur canalisé dans l'installation de chauffage, ventilation et/ou de climatisation. Corrélativement, le flux d'air intérieur est chauffé dans le but d'augmenter la température de l'habitacle du véhicule. Par suite, le fluide réfrigérant circule vers l'organe de détente, dans lequel il subit un abaissement de pression, avant de traverser l'échangeur de chaleur extérieur. Dans cette configuration, l'échangeur de chaleur extérieur se comporte comme un évaporateur, dans lequel le fluide réfrigérant est réchauffé par le flux d'air extérieur. Ensuite, le fluide réfrigérant retourne vers le compresseur.

Lorsque l'échangeur de chaleur intérieur est disposé dans le boîtier de l'installation de chauffage, ventilation et/ou climatisation, on définit alors un système de conditionnement thermique direct de l'habitacle de véhicule.

Lorsque l'échangeur de chaleur intérieur ne peut pas être monté directement dans le boîtier de l'installation de chauffage, ventilation et/ou climatisation, il est connu d'utiliser un circuit de fluide caloporteur pour transporter les calories depuis la boucle de climatisation vers le flux d'air intérieur destiné à être distribué dans l'habitacle.

Le circuit de fluide caloporteur comprend alors un premier échangeur thermique agencé pour mettre en oeuvre un échange thermique entre le fluide réfrigérant circulant dans la boucle de climatisation et le fluide caloporteur circulant dans le circuit de fluide caloporteur. De plus, le circuit de fluide caloporteur comprend également un deuxième échangeur thermique, faisant office d'échangeur de chaleur intérieur, destiné à réaliser un échange thermique entre le fluide caloporteur circulant dans le circuit de fluide caloporteur et le flux d'air intérieur destiné à être distribué dans l'habitacle.

Une telle configuration comportant un circuit de fluide caloporteur définit un système de conditionnement thermique indirect de l'habitacle de véhicule.

Le procédé selon la présente invention vise un système de conditionnement thermique indirect de l'habitacle de véhicule.

Au démarrage du véhicule et par temps froid, il est souhaitable de chauffer l'habitacle du véhicule le plus rapidement possible. Un tel chauffage est obtenu quand le fluide réfrigérant circulant dans une partie dit "haute pression" de la boucle de climatisation dépasse un certain seuil de pression. Malheureusement, la température du fluide caloporteur à l'intérieur du circuit de fluide caloporteur est basse. En tout état de cause, la température du fluide caloporteur est proche de la température à l'extérieur de l'habitacle du véhicule.

Dans une telle situation, le fluide caloporteur circulant dans le premier échangeur thermique refroidit le fluide réfrigérant circulant dans la boucle de climatisation de manière trop importante. D'un point de vue du cycle thermodynamique, le refroidissement du fluide réfrigérant par le fluide caloporteur a pour conséquence de retarder l'élévation de la pression du fluide réfrigérant dans la partie dite "haute pression" de la boucle de climatisation. Un tel phénomène va à l'encontre du but recherché précédemment évoqué.

Le but de la présente invention est donc de résoudre l'inconvénient décrit ci-dessus principalement en limitant l'échange thermique entre le fluide caloporteur et le fluide réfrigérant, de manière à favoriser une élévation de la pression du fluide réfrigérant dans la partie dite "haute pression" de la boucle de climatisation.

Une telle élévation de pression se traduit par une augmentation de la température du fluide réfrigérant à un niveau suffisant pour chauffer efficacement le fluide caloporteur, et, corrélativement, assurer une élévation de la température du flux d'air intérieur destiné à être distribué dans l'habitacle et assurer des conditions de confort attendues par l'utilisateur.

L'invention a donc pour objet un procédé de contrôle d'un système de conditionnement thermique d'un habitacle de véhicule comprenant un circuit de fluide réfrigérant, ou boucle de climatisation, et un circuit de fluide caloporteur destiné à transporter des calories générées par le circuit de fluide réfrigérant pour les délivrer à un flux d'air intérieur apte à être distribué dans l'habitacle. Le procédé de contrôle comprend une étape de régulation d'un débit du fluide caloporteur au cours de laquelle:

- le débit de fluide caloporteur est maintenu en dessous du seuil de débit tant qu'une pression du fluide réfrigérant est inférieure ou égale à un seuil de pression déterminé, et
- le débit de fluide caloporteur est augmenté au-delà du seuil de débit quand la pression du fluide réfrigérant est supérieure au seuil de pression déterminé.

Avantageusement, le seuil de débit est compris entre 10% et 20% d'un débit maximum du fluide caloporteur dans le circuit de fluide caloporteur, notamment au moins égal à 600 l/h. Tout particulièrement, le seuil de débit peut être égal à 100 l/h.

Selon une caractéristique de l'invention, le seuil de pression est déterminé par l'équation

$$P_{d\ limit} = P_{sat}\ [P_{air\ out}/\Delta\ (Q_{air},\ Q_{cal}) + T_{air\ in} + T_{delta}],$$

où

- $P_{d\ limit}$ est le seuil de pression,
- $P_{sat}$ est une pression de saturation du fluide réfrigérant,
- $P_{air\ out}$ est une puissance à fournir au flux d'air intérieur,
- $\Delta\ (Q_{air},\ Q_{cal})$ est une capacité d'échange thermique réalisé par le circuit de fluide caloporteur,
- $T_{air\ in}$ est une température du flux d'air intérieur, et
- $T_{delta}$ est un écart de température pour garantir l'établissement du cycle thermodynamique.

Selon une autre caractéristique de l'invention, le circuit de fluide réfrigérant comprend une partie dite "haute pression" et une partie dite "basse pression". Selon la présente invention, la mesure de pression du fluide réfrigérant est réalisée dans la partie dite "haute pression".

Avantageusement, quand la pression du fluide réfrigérant est supérieure au seuil de pression, on augmente le débit de fluide caloporteur jusqu'à une valeur adéquate pour fournir une puissance demandée, pour assurer un confort exigé dans l'habitacle.

On notera tout particulièrement qu'au démarrage du circuit de fluide réfrigérant, on limite le débit du fluide caloporteur en dessous du seuil de débit quand une température extérieure à l'habitacle est faible, notamment inférieure ou égale à 5°C.

Un tel procédé trouve un intérêt particulier quand le circuit de fluide réfrigérant est configuré dans un mode dit "chauffage".

Enfin, l'invention couvre aussi un système de conditionnement thermique d'un habitacle de véhicule comprenant un circuit de fluide réfrigérant, apte à fonctionner au moins dans un mode dit "refroidissement" ou dans un mode dit "chauffage", et un circuit de fluide caloporteur destiné à transporter des calories générées par le circuit de fluide réfrigérant pour les délivrer à un flux d'air intérieur apte à être distribué dans l'habitacle. Le système de conditionnement thermique comprend un dispositif de commande modifiant le débit de fluide caloporteur dans le circuit de fluide caloporteur en fonction d'une pression du fluide réfrigérant.

De manière préférentielle, la modification du débit est opérée quand le circuit de fluide réfrigérant est configuré dans un mode dit "chauffage". Le dispositif de commande modifie une vitesse de rotation d'une pompe de circulation du fluide caloporteur installée au sein du circuit de fluide caloporteur.

Un tout premier avantage selon la présente invention réside dans la possibilité de raccourcir le temps nécessaire pour chauffer l'habitacle d'un véhicule automobile, en particulier un véhicule automobile électrique ou hybride, comprenant un système de conditionnement thermique selon la présente invention.

Un autre avantage de la présente invention est directement lié à la source d'énergie qui alimente le compresseur intégré au circuit de fluide réfrigérant. Dans le cas où le compresseur est alimenté par une source électrique également utilisée pour alimenter le moteur électrique de propulsion, le procédé de contrôle selon la présente invention évite une augmentation brusque de la consommation électrique du compresseur au moment de la mise en fonctionnement du mode dit "chauffage".

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :

- la figure 1 est une vue schématique et partielle d'un système de conditionnement thermique d'un habitacle d'un véhicule selon la présente invention,
- la figure 2 est un organigramme illustrant les étapes d'un procédé de contrôle du système de conditionnement thermique de l'habitacle du véhicule selon la présente invention, et
- la figure 3 est un tracé montrant l'évolution d'une puissance disponible au niveau d'un échangeur de chaleur intérieur en fonction du temps.

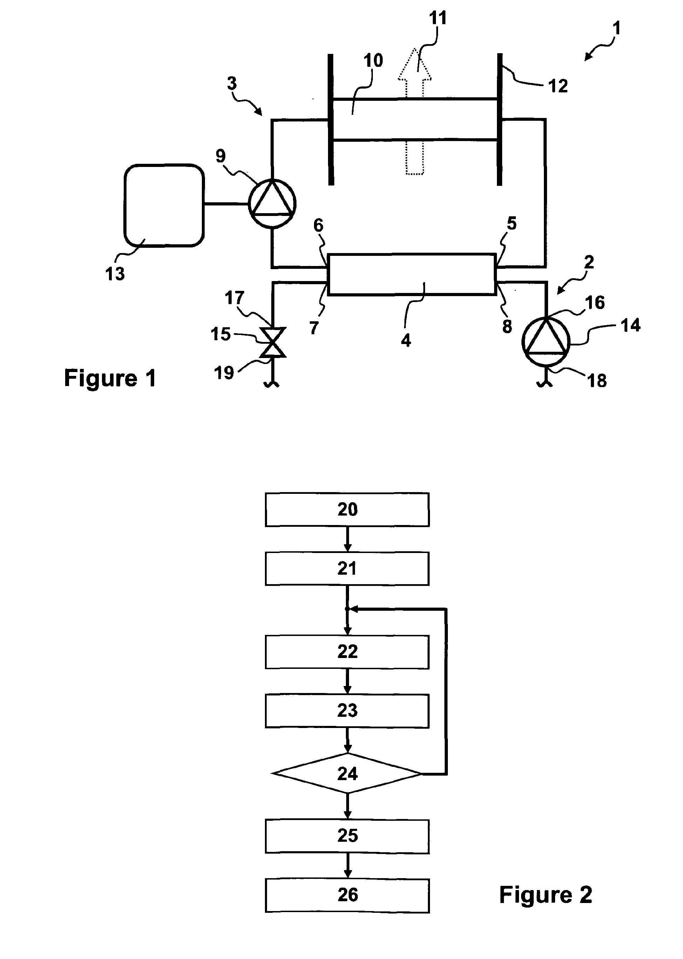

La figure 1 est une vue schématique d'un système de conditionnement thermique 1 d'un habitacle d'un véhicule selon la présente invention. Plus particulièrement, la figure 1 illustre de manière partielle le système de conditionnement thermique 1 comprenant une boucle de climatisation 2 et un circuit de fluide caloporteur 3. Selon la présente invention, la boucle de climatisation 2 et le circuit de fluide caloporteur 3 sont en interaction.

La boucle de climatisation 2 peut également être appelée "circuit de fluide réfrigérant 2". De même, le circuit de fluide caloporteur 3 peut être appelé "boucle secondaire 3".

Le circuit de fluide réfrigérant 2 est une boucle fermée à l'intérieur de laquelle circule un fluide réfrigérant, par exemple un fluide réfrigérant sous-critique tel qu'un composé fluoré, notamment le R134a, ou un fluide réfrigérant sur-critique, tel que le dioxyde de carbone, connu sous la dénomination R744A.

Le fluide réfrigérant est mis en circulation par un compresseur 14, par exemple alimenté électriquement, dont la fonction est d'augmenter la pression et la température du fluide réfrigérant.

Le circuit de fluide réfrigérant 2 comprend par ailleurs au moins un échangeur de chaleur extérieur, non représenté. L'échangeur de chaleur extérieur est agencé pour réaliser un échange thermique entre un flux d'air extérieur à l'habitacle du véhicule et le fluide réfrigérant circulant dans le circuit de fluide réfrigérant 2.

L'échangeur de chaleur extérieur peut être utilisé en tant que refroidisseur de gaz ou condenseur, quand le circuit de fluide réfrigérant 2 est opéré dans le mode dit "refroidissement". Par ailleurs, l'échangeur de chaleur extérieur peut également être utilisé en tant qu'évaporateur, quand le circuit de fluide réfrigérant 2 est opéré dans le mode dit "chauffage".

De plus, le circuit de fluide réfrigérant 2 comprend également au moins un organe de détente 15, apte à abaisser la pression du fluide réfrigérant, et ainsi assurer la détente nécessaire au fonctionnement du cycle thermodynamique qui prend place dans le circuit de fluide réfrigérant 2.

Par ailleurs, le circuit de fluide réfrigérant 2 comprend encore une bouteille ou un accumulateur, non représenté, destiné à stocker un volume non circulant du fluide réfrigérant.

Le circuit de fluide réfrigérant 2 comprend également un échangeur de chaleur intermédiaire 4. L'échangeur de chaleur intermédiaire 4 est qualifié d'"intermédiaire" car il permet de réaliser un échange thermique entre un fluide caloporteur circulant dans le circuit de fluide caloporteur 3 et le fluide réfrigérant circulant dans le circuit de fluide réfrigérant 2.

Le circuit de fluide réfrigérant 2 est complété par une pluralité de conduites chargée de mettre en relation les divers composants du circuit de fluide réfrigérant 2 évoqués ci-dessus.

Ainsi, quand le circuit de fluide réfrigérant 2 est configuré dans le mode dit "chauffage", le fluide réfrigérant transmet ses calories au fluide caloporteur. Autrement dit, une température de sortie du fluide caloporteur au niveau d'une première sortie 5 de l'échangeur de chaleur intermédiaire 4 est supérieure à une température d'entrée du fluide caloporteur au niveau d'une première entrée 6 de l'échangeur de chaleur intermédiaire 4.

Corrélativement, une température de sortie du fluide réfrigérant au niveau d'une deuxième sortie 7 de l'échangeur de chaleur intermédiaire 4 est inférieure à une température d'entrée du fluide réfrigérant au niveau d'une deuxième entrée 8 de l'échangeur de chaleur intermédiaire 4.

Le circuit de fluide réfrigérant 2 présenté ci-dessus comporte deux parties, respectivement une partie dite "haute pression" et une partie dite "basse pression" lorsque le compresseur 14 est en fonctionnement.

La partie dite "haute pression" du circuit de fluide caloporteur 2 est la portion comprise entre un orifice de sortie 16 du compresseur 14 et un orifice d'entrée 17 de l'organe de détente 15, lorsque le circuit de fluide réfrigérant 2 est configuré dans le mode dit "chauffage". Dans la partie dite "haute pression" du circuit de fluide caloporteur 2, le fluide réfrigérant est à haute pression et à haute température.

La partie dite "basse pression" du circuit de fluide caloporteur 2 est la portion comprise entre un orifice de sortie 19 de l'organe de détente 15 et un orifice d'entrée 18 du compresseur 14, lorsque le circuit de fluide réfrigérant 2 est configuré dans le mode dit "chauffage". Dans la partie dite "basse pression" du circuit de fluide caloporteur 2, le fluide réfrigérant est à basse pression et à basse température, c'est-à-dire à une pression inférieure à la haute pression et à une température inférieure à la haute température du fluide réfrigérant de la partie dite "haute pression" du circuit de fluide caloporteur 2.

Quand le circuit de fluide réfrigérant 2 est utilisé dans le mode dit "refroidissement", la partie dite "haute pression" et la partie dite "basse pression" du circuit de fluide caloporteur 2 sont inversées par rapport à ce qui est décrit ci-dessus en relation avec le mode dit "chauffage".

Le circuit de fluide caloporteur 3 intègre au moins une partie de l'échangeur de chaleur intermédiaire 4. Le circuit de fluide caloporteur 3 comprend également au moins une pompe de circulation 9 permettant une mise en circulation du fluide caloporteur.

La pompe de circulation 9 peut, par exemple, être contrôlée électriquement par un dispositif de commande 13 selon des vitesses variables, ce qui permet d'influencer un débit de fluide caloporteur $Q_{cal}$ dans le circuit de fluide caloporteur 3.

Bien entendu, d'autres moyens peuvent être mis en oeuvre pour modifier le débit de fluide caloporteur $Q_{cal}$ comme, par exemple, l'implantation de restriction à section ajustable dans le circuit de fluide caloporteur 3.

Le circuit de fluide caloporteur 3 comprend encore un aérotherme 10, un échangeur de chaleur interne 10. L'aérotherme 10 est un échangeur de chaleur agencé pour réaliser un échange thermique entre le fluide caloporteur et le flux d'air intérieur 11 destiné à être distribué l'habitacle du véhicule.

Avantageusement, l'aérotherme 10 est installé transversalement au flux d'air intérieur 11 dans un boîtier 12 d'une installation de chauffage, ventilation et/ou climatisation équipant le véhicule.

Le boîtier 12 de l'installation de chauffage, ventilation et/ou climatisation permet de canaliser le flux d'air intérieur 11. Le flux d'air intérieur 11 est mis en mouvement, à l'intérieur du boîtier 12, par l'intermédiaire d'un groupe moto-ventilateur, non représenté.

L'aérotherme 10 est destiné à transférer les calories transportées par le fluide caloporteur en provenance de l'échangeur intermédiaire 4 au flux d'air intérieur 11.

Le circuit de fluide caloporteur 3 est complété par une pluralité de conduites chargée de mettre en relation les divers composants du circuit de fluide caloporteur 3 évoqués ci-dessus.

La figure 2 illustre un organigramme illustrant les étapes principales et les étapes optionnelles d'un procédé de contrôle du système de conditionnement thermique de l'habitacle du véhicule selon la présente invention.

Le procédé de contrôle débute par une étape initiale 20 correspondant au démarrage du circuit de fluide réfrigérant 2. Par démarrage, il faut entendre la mise en fonctionnement du compresseur 14 afin d'assurer la circulation du fluide réfrigérant dans le circuit de fluide réfrigérant 2.

On notera que l'étape initiale 20 est notamment mise en oeuvre quand l'utilisateur du véhicule souhaite assurer le chauffage de l'habitacle, requérant, en particulier, la configuration du circuit de fluide réfrigérant 2 dans le mode dit "chauffage".

Optionnellement, lorsque la température à l'extérieur de l'habitacle du véhicule est basse, par exemple inférieure à 5°C, une phase de vérification d'un tel seuil de température peut constituée une étape préalable à la mise en oeuvre du circuit de fluide réfrigérant 2 dans le mode dit "chauffage". La phase de vérification est optionnelle et peut être réalisée au cours de l'étape initiale 20.

Suite l'étape initiale 20, le procédé de contrôle comporte une étape d'acquisition 21 permettant la collecte des données relatives à l'état du fluide réfrigérant circulant dans le circuit de fluide réfrigérant 2 et du fluide caloporteur circulant dans le circuit de fluide caloporteur 3 au moment du démarrage du circuit de fluide réfrigérant 2.

L'étape d'acquisition 21 est une étape optionnelle du procédé de contrôle selon la présente invention.

La collecte de données permet l'acquisition des informations et signaux utilisés à des étapes ultérieures du procédé de contrôle.

Les informations et les signaux d'état collectés sont par exemple :

- une température $T_{air\,in}$ du flux d'air intérieur 11, en amont de l'aérotherme 10, selon le sens de déplacement du flux d'air intérieur 11 dans le boîtier 12. La température $T_{air\,in}$ peut être assimilée à la température extérieure à l'habitacle du véhicule, mesurée par un capteur de température,

- un débit $Q_{air}$ du flux d'air intérieur 11. Par exemple, le débit $Q_{air}$ du flux d'air intérieur 11 peut être fonction d'une commande $U_{vent}$ du groupe moto-ventilateur destiné à mettre en mouvement le flux d'air intérieur 11 à l'intérieur du boîtier 12, et une vitesse $V_{veh}$ du véhicule,
- une pression $P_d$ mesurée en un point de la partie "haute pression" du circuit de fluide réfrigérant 2. Alternativement, la pression $P_d$ peut être déduite à partir d'une température du fluide réfrigérant. Toutefois, il est avantageux de mesurer la pression $P_d$ au sein du circuit de fluide réfrigérant 2. A cet effet, préférentiellement, l'invention prévoit l'implantation d'un capteur de pression au niveau du compresseur 14, par exemple au niveau de l'orifice de sortie 16 du compresseur 14,
- une puissance $P_{air\,out}$ sur l'air à fournir pour assurer le confort dans l'habitacle. La puissance $P_{air\,out}$ est, notamment, dépendante de la température de l'habitacle exigée par l'utilisateur, de la température de l'air à l'extérieur de l'habitacle, d'un ensoleillement, ...
- un débit $Q_{cal}$ du fluide caloporteur dans le circuit de fluide caloporteur 3. Le débit $Q_{cal}$ du fluide caloporteur est obtenu à partir d'un signal de commande de la pompe de circulation 9 envoyé par le dispositif de commande 13.

Suite au démarrage du circuit de fluide réfrigérant 2, par exemple dans le mode dit "chauffage", le procédé de contrôle comprend une étape de contrôle 22 au cours de laquelle le dispositif de commande 13 du circuit de fluide caloporteur 3 contrôle la pompe de circulation 9.

Notamment, le dispositif de commande 13 du circuit de fluide caloporteur 3 contrôle la pompe de circulation 9 à une vitesse réduite, ce qui se traduit par une circulation du fluide caloporteur dans le circuit de fluide caloporteur 3 à un débit inférieur à un seuil de débit $Q_{cal\,limit}$ prédéterminé.

Le seuil de débit $Q_{cao\,limit}$ est déterminé de sorte que l'échange thermique au sein de l'échangeur de chaleur intermédiaire 4 favorise l'élévation de la pression du fluide réfrigérant dans la partie dire "haute pression" du circuit de fluide réfrigérant 2. Autrement dit, le seuil de débit $Q_{cal\,limit}$ est choisi afin que le fluide caloporteur ne refroidisse pas le fluide réfrigérant. L'échange thermique entre le fluide caloporteur et le fluide réfrigérant est ainsi limité.

Avantageusement, le fait de limiter l'échange thermique entre le fluide réfrigérant et le fluide caloporteur pendant la phase de démarrage est atteint quand le seuil de débit $Q_{cal\,limit}$ est compris entre 10% et 20% d'un débit maximum du fluide caloporteur $Q_{cal\,max}$ dans le circuit de fluide caloporteur 2. L e débit maximum du fluide caloporteur $Q_{cal\,max}$ est avantageusement au moins égal à 600 l/h.

A titre d'exemple, il a été déterminé qu'un seuil débit $Q_{cal\,limit}$ égal à 100 l/h permet de définir un compromis efficace entre un minimum de chauffage envoyé dans l'habitacle et le temps nécessaire pour que le fluide réfrigérant atteigne une haute pression compatible avec les besoins en chauffage de l'habitacle.

Par suite, le procédé de contrôle comporte une étape de détermination de pression 23 au cours de laquelle un seuil de pression $P_{d\,limit}$ du fluide réfrigérant dans la partie dite "haute pression" du circuit de fluide réfrigérant 2 est déterminé.

Le seuil de pression $P_{d\,limit}$ du fluide réfrigérant dans la partie dite "haute pression" du circuit de fluide réfrigérant 2 évolue en fonction de conditions externes au circuit de fluide réfrigérant 2, notamment en fonction de la température de l'air à l'extérieur de l'habitacle et/ou en fonction de la température demandée par l'utilisateur.

Le seuil de pression $P_{d\,limit}$ est déterminé selon l'équation qui suit :

$$P_{d\,limit} = P_{sat}\,[P_{air\,out}/\Delta(Q_{air},\,Q_{cal}) + T_{air\,in} + T_{delta}],$$

dans laquelle

$P_{d\,limit}$ est le seuil de pression du fluide réfrigérant déterminant le passage d'un fonctionnement en débit limité à un fonctionnement en débit adéquat pour fournir la puissance nécessaire pour répondre à la demande de confort dans l'habitacle ,

$P_{sat}$ est la pression de saturation du fluide réfrigérant,

$P_{air\,out}$ est la puissance à fournir au flux d'air intérieur 11 pour assurer le confort dans l'habitacle,

$\Delta(Q_{air},\,Q_{cal})$ est la capacité d'échange thermique réalisée par le circuit de fluide caloporteur 3. A titre d'exemple de réalisation, la capacité d'échange thermique est celle du sous-ensemble constitué par l'échangeur de chaleur intermédiaire 4 et l'aérotherme 10,

$T_{air\,in}$ est la température du flux d'air intérieur 11 en amont de l'aérotherme 10, selon le sens de déplacement du flux d'air intérieur 11 dans le boîtier 12. La température $T_{air\,in}$ du flux d'air intérieur 11 peut être assimilée à la température extérieure à l'habitacle du véhicule, mesurée par un capteur de température, et

$T_{delta}$ est un écart de température pour garantir l'établissement du cycle thermodynamique. Notamment, l'écart $T_{delta}$ de température permet de garantir que la pression de fluide réfrigérant dans la partie dite "haute pression" du circuit de fluide réfrigérant 2 atteint une niveau compatible avec la puissance sur l'air demandée. A titre d'exemple, l'écart $T_{delta}$ de température peut notamment varier entre 0 à 10°C.

Si le procédé de contrôle comporte l'étape d'acquisition 21, le procédé de contrôle comporte une étape de comparaison de pression 24 au cours de laquelle la pression $P_d$ du fluide réfrigérant obtenue lors de l'étape d'acquisition 21 est comparée avec le seuil de pression $P_{d\ limit}$ déterminé à l'étape de détermination de pression 23.

Dans le cas où le procédé de contrôle ne comporte pas l'étape d'acquisition 21, l'étape de comparaison de pression 24 intègre une étape préliminaire de détermination de pression effective du fluide réfrigérant dans la partie dite "haute pression" du circuit de fluide réfrigérant 2.

L'étape préliminaire de détermination de pression effective peut intégrée une déduction de la pression effective du fluide réfrigérant à partir d'une température du fluide réfrigérant. Toutefois, il est avantageux que l'étape préliminaire de détermination de pression effective comporte l'acquisition de la pression au sein du circuit de fluide réfrigérant 2. Pour ce faire, l'invention prévoit l'implantation d'un capteur de pression au niveau du compresseur, par exemple au niveau de l'orifice de sortie du compresseur 14.

Si la pression $P_d$ du fluide réfrigérant, évaluée ou mesurée, est inférieure ou égale au seuil de pression $P_{d\ limit}$ déterminé à l'étape de détermination de pression 23, le procédé de contrôle renvoie à l'étape de contrôle 22.

En pratique, ceci traduit le fait que la pression $P_d$ du fluide réfrigérant au niveau de l'échangeur de chaleur intermédiaire 4 n'a pas atteint un niveau suffisant pour assurer un chauffage rapide de l'habitacle. Le procédé de contrôle maintien alors le débit de fluide caloporteur $Q_{cal}$ dans le circuit de fluide caloporteur 3 en dessous du seuil de débit $Q_{cal\ limit}$ déterminé à l'étape de contrôle 22.

En l'absence du procédé de contrôle selon la présente invention, il serait observé une phase où on abaisse la température du flux d'air intérieur 11 distribué dans l'habitacle. Une telle situation est particulièrement désagréable pour l'utilisateur du véhicule.

En revanche, si la comparaison effectuée à l'étape de comparaison de pression 24 montre que la pression $P_d$ du fluide réfrigérant dans la partie dite "haute pression" du circuit de fluide réfrigérant 2 dépasse le seuil de pression $P_{d\ limit}$ déterminée à l'étape de détermination de pression 23, le procédé de contrôle prévoit une étape d'augmentation de vitesse 25, au cours de laquelle que le dispositif de commande 13 augmente la vitesse de rotation de la pompe de circulation 9. L'augmentation de la vitesse de rotation de la pompe de circulation 9 se traduit par une élévation du débit de fluide caloporteur $Q_{cal}$ au-delà du seuil de débit $Q_{cal\ limit}$ préalablement déterminé.

De manière avantageuse, mais optionnelle, l'augmentation du débit $Q_{cal}$ de fluide caloporteur dans le circuit de fluide caloporteur 3 est opérée jusqu'à un niveau correspondant à une puissance demandée, définie précédemment comme étant la puissance $P_{air\ out}$ à fournir au flux d'air intérieur 11 pour assurer le confort dans l'habitacle, déterminée notamment par la température de l'air à l'extérieur de l'habitacle, l'ensoleillement, la température à l'intérieur de l'habitacle demandée par l'utilisateur et la température instantanée de l'air dans l'habitacle, ...

Enfin, le procédé de contrôle selon la présente invention comporte par une étape de fin 26.

En effet, il est considéré que, lorsque la pression $P_d$ du fluide réfrigérant dans la partie dite "haute pression" du circuit de fluide réfrigérant 2 a dépassé le seuil de pression $P_{d\ limit}$, la pression $P_d$ du fluide réfrigérant dans la partie dite "haute pression" ne descendra pas en dessous du seuil de pression $P_{d\ limit}$ si bien qu'il est inutile de mobiliser une ressource de calcul dans le dispositif de commande 13 pour réitérer le procédé de contrôle selon la présente invention.

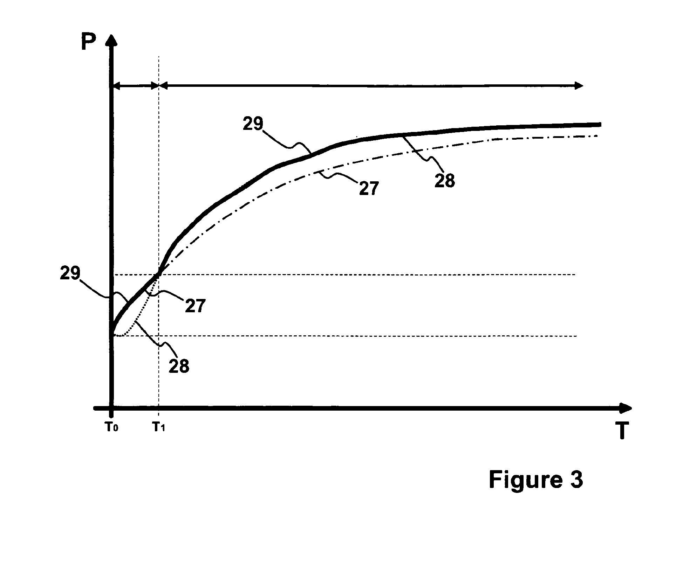

La figure 3 est un tracé montrant l'évolution d'une puissance P disponible au niveau de l'échangeur de chaleur intermédiaire 4 en fonction du temps. La puissance P disponible, illustrant une quantité de calories disponibles, est représentée en ordonnée alors que le temps est représenté en abscisse.

Une première courbe référencée 27, représentée en traits mixtes, montre l'évolution de la puissance P disponible au niveau de l'échangeur de chaleur intermédiaire 4 quand le débit $Q_{cal}$ de fluide caloporteur est constamment maintenu en dessous du seuil de débit $Q_{cal\ limit}$.

Une deuxième courbe référencée 28, représentée en pointillés, illustre l'évolution de la puissance P disponible au niveau de l'échangeur de chaleur intermédiaire 4 quand le débit $Q_{cal}$ de fluide caloporteur est au dessus du seuil de débit $Q_{cal\ limit}$.

On constate que pendant une période comprise entre $T_0$, instant de démarrage du circuit de fluide réfrigérant 2, et $T_1$, instant où la pression du fluide réfrigérant $P_d$ dans la partie dite "haute pression" du circuit de fluide réfrigérant 2 est inférieure au seuil de pression $P_{d\ limit}$ déterminé, la puissance disponible au niveau de l'échangeur de chaleur intermédiaire 4 est supérieure pour une configuration telle que le débit $Q_{cal}$ de fluide caloporteur est constamment maintenu en dessous du seuil de débit $Q_{cal\ limit}$ (première courbe 27) par rapport à une configuration telle que le débit $Q_{cal}$ de fluide caloporteur est au dessus du seuil de débit $Q_{cal\ limit}$ (deuxième courbe 28).

La tendance s'inverse après l'instant $T_1$ correspondant au moment où la pression $P_d$ du fluide réfrigérant dans la partie dite "haute pression" du circuit de fluide réfrigérant 2 dépasse le seuil de pression $P_{d\ limit}$ déterminé. En effet, après $T_1$, une configuration telle que le débit $Q_{cal}$ de fluide caloporteur est au dessus du seuil de débit $Q_{cal\ limit}$ (deuxième courbe 28) fournit une quantité de puissance plus importante qu'une configuration telle que le débit $Q_{cal}$ de fluide caloporteur est constamment maintenu en dessous du seuil de débit $Q_{cal\ limit}$ (première courbe 27).

La figure 3 comporte une troisième courbe référencée 29 illustrant la manière dont le procédé de contrôle selon la présente invention pilote le débit $Q_{cal}$ de fluide caloporteur dans le circuit de fluide caloporteur 3.

Selon la présente invention, le procédé de contrôle comporte une étape de régulation dans laquelle, tant que la pression $P_d$ du fluide réfrigérant dans la partie dite "haute pression" du circuit de fluide réfrigérant 2 est inférieure au seuil de pression $P_{d\ limit}$ déterminé, c'est-à-dire durant la période comprise entre $T_0$ et $T_1$, le dispositif de commande 13 contrôle la pompe de circulation 9 de manière à maintenir le débit $Q_{cal}$ de fluide caloporteur en dessous du seuil de débit $Q_{cal\ limit}$. Par suite, dès que la pression $P_d$ du fluide réfrigérant dans la partie dite "haute pression" du circuit de fluide réfrigérant 2 dépasse le seuil de pression $P_{d\ limit}$ déterminé, c'est-à-dire après l'instant $T_1$, le dispositif de commande 13 contrôle la pompe de circulation 9 de manière à franchir le seuil de débit $Q_{cal\ limit}$ de fluide caloporteur.

A titre d'exemple, la vitesse de la pompe de circulation 9 est ainsi pilotée pour fournir entre 80% et 100% du débit maximum $Q_{cal\ max}$ de fluide caloporteur.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment, pris séparément ou en association.

## Revendications

**1.** Procédé de contrôle d'un système de conditionnement thermique (1) d'un habitacle de véhicule comprenant:

- un circuit de fluide réfrigérant (2), et
- un circuit de fluide caloporteur (3) destiné à transporter des calories générées par le circuit de fluide réfrigérant (2) pour les délivrer à un flux d'air intérieur (11) apte à être distribué dans l'habitacle,

**caractérisé en ce que** le procédé de contrôle comprend une étape de régulation d'un débit $Q_{cal}$ du fluide caloporteur au cours de laquelle:

- le débit $Q_{cal}$ de fluide caloporteur est maintenu en dessous du seuil de débit $Q_{cal\ limit}$ tant qu'une pression $P_d$ du fluide réfrigérant est inférieure ou égale à un seuil de pression $P_{d\ limit}$ déterminé, et
- le débit $Q_{cal}$ de fluide caloporteur est augmenté au-delà du seuil de débit $Q_{cal\ limit}$ quand la pression $P_d$ du fluide réfrigérant est supérieure au seuil de pression $P_{d\ limit}$ déterminé.

**2.** Procédé de contrôle selon la revendication 1, dans lequel le seuil de débit $Q_{cal\ limit}$ est compris entre 10% et 20% d'un débit maximum $Q_{cal\ max}$ du fluide caloporteur dans le circuit de fluide caloporteur (3).

**3.** Procédé de contrôle selon la revendication 2, dans lequel le débit maximum $Q_{cal\ max}$ de fluide caloporteur est au moins égal à 600 l/h.

**4.** Procédé de contrôle selon l'une quelconque des revendications 1 à 3, dans lequel le seuil de débit $Q_{cal\ limit}$ est égal à 100 l/h.

**5.** Procédé de contrôle selon l'une quelconque des revendications 1 à 3, dans lequel le seuil de pression $P_{d\ limit}$ est déterminé par l'équation

$$P_{d\ limit} = P_{sat}\,[P_{air\ out}/\Delta\,(Q_{air},\ Q_{cal}) + T_{air\ in} + T_{delta}],$$

dans laquelle

- $P_{d\ limit}$ est le seuil de pression,
- $P_{sat}$ est une pression de saturation du fluide réfrigérant,
- $P_{air\ out}$ est une puissance à fournir au flux d'air intérieur (11),
- $\Delta\,(Q_{air},\ Q_{cal})$ est une capacité d'échange thermique réalisé par le circuit de fluide caloporteur (3),
- $T_{air\ in}$ est une température du flux d'air intérieur (11),
- $T_{delta}$ est un écart de température pour garantir l'établissement du cycle thermodynamique.

6. Procédé de contrôle selon l'une quelconque des revendications précédentes, dans lequel le circuit de fluide réfrigérant (2) comprend une partie dite "haute pression" et une partie dite "basse pression", la pression $P_d$ du fluide réfrigérant étant mesurée dans la partie dite "haute pression".

7. Procédé de contrôle selon l'une quelconque des revendications précédentes, dans lequel, quand la pression $P_d$ du fluide réfrigérant est supérieure au seuil de pression $P_{d\ limit}$, on augmente le débit $Q_{cal}$ de fluide caloporteur jusqu'à une valeur correspondant à une puissance demandée $P_{air\ out}$, pour assurer un confort dans l'habitacle.

8. Procédé de contrôle selon l'une quelconque des revendications précédentes, dans lequel au démarrage du circuit de fluide réfrigérant (2), on limite le débit $Q_{cal}$ du fluide caloporteur en dessous du seuil de débit $Q_{cal\ limit}$ quand une température extérieure à l'habitacle est inférieure ou égale à 5°C.

9. Procédé de contrôle selon l'une quelconque des revendications précédentes, **caractérisé en ce que** le procédé est mis en oeuvre seulement quand le circuit de fluide réfrigérant (2) est configuré dans un mode dit "chauffage".

10. Système de conditionnement thermique (1) d'un habitacle de véhicule comprenant un circuit de fluide réfrigérant (2) et un circuit de fluide caloporteur (3) destiné à transporter des calories générées par le circuit de fluide réfrigérant (2) pour les délivrer à un flux d'air intérieur (11) apte à être distribué dans l'habitacle,
**caractérisé en ce que** le système de conditionnement thermique (1) comprend un dispositif de commande (13) modifiant un débit $Q_{cal}$ de fluide caloporteur dans le circuit de fluide caloporteur (3) en fonction d'une pression $P_d$ du fluide réfrigérant.

**Patentansprüche**

1. Verfahren zur Regelung einer Klimaanlage (1) einer Fahrgastzelle, das Folgendes aufweist:

- einen Kühlflüssigkeitskreislauf (2) und
- einen Wärmeträgerkreislauf (3), der dazu bestimmt ist, Kalorien, die von dem Kühlflüssigkeitskreislauf (2) erzeugt werden, zu transportieren, um sie zu einem inneren Luftstrom (11) zu liefern, der geeignet ist, um in der Fahrgastzelle verteilt zu werden,

dadurch gekennzeichnet, dass das Regelungsverfahren einen Regelungsschritt eines Durchsatzes $Q_{cal}$ des Wärmeträgers aufweist, in dessen Verlauf:

- der Durchsatz $Q_{cal}$ des Wärmeträgers unterhalb des Durchsatzschwellenwerts $Q_{cal\ limit}$ aufrechterhalten wird, solange ein Druck $P_d$ der Kühlflüssigkeit kleiner oder gleich ist wie ein festgelegter Druckschwellenwert $P_{d\ limit}$, und
- der Durchsatz $Q_{cal}$ des Wärmeträgers über den Durchsatzschwellenwert $Q_{cal\ limit}$ hinaus erhöht wird, wenn der Druck $P_d$ der Kühlflüssigkeit größer ist als der festgelegte Druckschwellenwert $P_{d\ limit}$.

2. Regelungsverfahren nach Anspruch 1, bei dem der Durchsatzschwellenwert $Q_{cal\ limit}$ zwischen 10 % und 20 % eines maximalen Durchsatzes $Q_{cal\ max}$ des Wärmeträgers in dem Wärmeträgerkreislauf (3) liegt.

3. Regelungsverfahren nach Anspruch 2, bei dem der maximale Durchsatz $Q_{cal\ max}$ des Wärmeträgers mindestens gleich 600 l/h ist.

4. Regelungsverfahren nach einem der Ansprüche 1 bis 3, bei dem der Durchsatzschwellenwert $Q_{cal\ limit}$ gleich 100 l/h ist.

5. Regelungsverfahren nach einem der Ansprüche 1 bis 3, bei dem der Druckschwellenwert $P_{d\ limit}$ von der folgenden Gleichung

$$P_{d\ limit} = P_{sat}\ [P_{air\ out}/\Delta(Q_{air},\ Q_{cal}) + T_{air\ in} + T_{delta}],$$

festgelegt wird, wobei

- $P_{d\ limit}$ der Druckschwellenwert ist,
- $P_{sat}$ ein Sättigungsdruck der Kühlflüssigkeit ist,
- $P_{air\ out}$ eine Leistung ist, die zu dem inneren Luftstrom (11) zu liefern ist,
- $\Delta(Q_{air},\ Q_{cal})$ eine Wärmeaustauschkapazität ist, die von dem Wärmeträgerkreislauf (3) gewährleistet wird,
- $T_{air\ in}$ eine Temperatur des inneren Luftstroms (11) ist,
- $T_{delta}$ ein Wärmeunterschied ist, um das Einrichten des thermodynamischen Zyklus zu garantieren.

6. Regelungsverfahren nach einem der vorhergehenden Ansprüche, bei dem der Kühlflüssigkeitskreislauf (2) einen "Hochdruck" genannten Teil und einen "Niederdruck" genannten Teil aufweist, wobei der Druck $P_d$ der Kühlflüssigkeit in dem "Hochdruck" genannten Teil gemessen wird.

7. Regelungsverfahren nach einem der vorhergehenden Ansprüche, bei dem man, wenn der Druck $P_d$ der Kühlflüssigkeit größer ist als der Schwellendruckwert $P_{d\ limit}$, den Wärmeträgerdurchsatz $Q_{cal}$ bis auf einen Wert erhöht, der einer geforderten Leistung $P_{air\ out}$ entspricht, um in der Fahrgastzelle einen Komfort sicherzustellen.

8. Regelungsverfahren nach einem der vorhergehenden Ansprüche, bei dem man beim Starten des Kühlflüssigkeitskreislaufs (2) den Wärmeträgerdurchsatz $Q_{cal}$ unterhalb des Durchsatzschwellenwerts $Q_{cal\ limit}$ beschränkt, wenn eine Temperatur außerhalb der Fahrgastzelle kleiner oder gleich 5°C ist.

9. Regelungsverfahren nach einem der vorhergehenden Ansprüche, **dadurch gekennzeichnet, dass** das Verfahren nur angewandt wird, wenn der Kühlflüssigkeitskreislauf (2) in einer "Heizen" genannten Betriebsart konfiguriert ist.

10. Klimaanlage (1) einer Fahrzeugfahrgastzelle, die einen Kühlflüssigkeitskreislauf (2) und einen Wärmeträgerkreislauf (3) aufweist, der dazu bestimmt ist, Kalorien, die von dem Kühlflüssigkeitskreislauf (2) erzeugt werden, zu transportieren, um sie zu einem inneren Luftstrom (11) zu liefern, der geeignet ist, um in der Fahrgastzelle verteilt zu werden, **dadurch gekennzeichnet, dass** die Klimaanlage (1) eine Steuervorrichtung (13) aufweist, die einen Wärmeträgerdurchsatz $Q_{cal}$ in dem Wärmeträgerkreislauf (3) in Abhängigkeit von einem Druck $P_d$ der Kühlflüssigkeit ändert.

**Claims**

1. Method for controlling a system (1) for thermally conditioning a vehicle passenger compartment, comprising:

   - a coolant fluid circuit (2), and
   - a heat transfer fluid circuit (3) intended to transport calories generated by the coolant fluid circuit (2) in order to deliver them to a stream of interior air (11) that is able to be distributed in the passenger compartment,

   **characterized in that** the control method includes a step of regulating a flow rate $Q_{cal}$ of the heat transfer fluid, during which:

   - the heat transfer fluid flow rate $Q_{cal}$ is kept below the flow rate threshold $Q_{cal\ limit}$ while a pressure $P_d$ of the coolant fluid is less than or equal to a predetermined pressure threshold $P_{d\ limit}$, and
   - the heat transfer fluid flow rate $Q_{cal}$ is increased beyond the flow rate threshold $Q_{cal\ limit}$ when the pressure $P_d$ of the coolant fluid is greater than the predetermined pressure threshold $P_{d\ limit}$.

2. Control method according to Claim 1, in which the flow rate threshold $Q_{cal\ limit}$ is between 10% and 20% of a maximum flow rate $Q_{cal\ max}$ of the heat transfer fluid in the heat transfer fluid circuit (3).

3. Control method according to Claim 2, in which the maximum heat transfer fluid flow rate $Q_{cal\,max}$ is at least equal to 600 l/h.

4. Control method according to any one of Claims 1 to 3, in which the flow rate threshold $Q_{cal\,limit}$ is equal to 100 l/h.

5. Control method according to any one of Claims 1 to 3, in which the pressure threshold $P_{d\,limit}$ is determined by the equation

$$P_{d\,limit} = P_{sat}[P_{air\,out}/\Delta(Q_{air},\ Q_{cal}) + T_{air\,in} + T_{delta}],$$

in which

- $P_{d\,limit}$ is the pressure threshold,
- $P_{sat}$ is a saturation pressure of the coolant fluid,
- $P_{air\,out}$ is a power to be supplied to the stream of interior air (11),
- $\Delta(Q_{air}, Q_{cal})$ is a heat exchange capacity realized by the heat transfer fluid circuit (3),
- $T_{air\,in}$ is a temperature of the stream of interior air (11),
- $T_{delta}$ is a temperature difference for ensuring the establishment of the thermodynamic cycle.

6. Control method according to any one of the preceding claims, in which the coolant fluid circuit (2) comprises a part known as the "high-pressure" part and a part known as the "low-pressure" part, the pressure $P_d$ of the coolant fluid being measured in the part known as the "high-pressure" part.

7. Control method according to any one of the preceding claims, in which, when the pressure $P_d$ of the coolant fluid is greater than the pressure threshold $P_{d\,limit}$, the heat transfer fluid flow rate $Q_{cal}$ is increased to a value corresponding to a required power $P_{air\,out}$, in order to ensure a level of comfort in the passenger compartment.

8. Control method according to any one of the preceding claims, in which, when the coolant fluid circuit (2) is started, the flow rate $Q_{cal}$ of the heat transfer fluid is limited below the flow rate threshold $Q_{cal\,limit}$ when a temperature outside the passenger compartment is less than or equal to 5°C.

9. Control method according to any one of the preceding claims, **characterized in that** the method is implemented only when the coolant fluid circuit (2) is configured in a mode known as the "heating" mode.

10. System (1) for thermally conditioning a vehicle passenger compartment, comprising a coolant fluid circuit (2) and a heat transfer fluid circuit (3) intended to transport calories generated by the coolant fluid circuit (2) in order to deliver them to a stream of interior air (11) that is able to be distributed in the passenger compartment, **characterized in that** the thermal conditioning system (1) comprises a control device (13) that modifies a heat transfer fluid flow rate $Q_{cal}$ in the heat transfer fluid circuit (3) as a function of a pressure $P_d$ of the coolant fluid.

**Figure 1**

**Figure 2**

**Figure 3**

**EP 2 699 434 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   WO 2009085937 A1